# EUROPÄISCHE PATENTANMELDUNG

(11) **EP 2 083 339 A1**
(43) Veröffentlichungstag der Anmeldung: **29.07.2009**
(21) Anmeldenummer: 08100972.2
(22) Anmeldetag: 28.01.2008
(51) Int. Cl.: G05B 23/02, G05B 17/00, G05B 17/02, G01M 17/00, G06F 11/263, G06F 11/273, B60R 16/02

(54) **Verfahren und Vorrichtung zur Ausführung von Tests mittels funktional kaskadierten Test- und Experimentiervorrichtungen**

(71) Anmelder: dSPACE digital signal processing and control engineering GmbH, 33100 Paderborn (DE)
(72) Erfinder: Bruski, Nicola, Dr., 33102 Paderborn (DE); Krisp, Holger, 30890 Barsinghausen (DE); Große Börger, Ralf, 33102 Paderborn (DE); Miller, Eduard, 33154 Salzkotten (DE); Wölfer, Thomas, 33098 Paderborn (DE); Richert, Jobst, Dr., 59558 Lippstadt (DE)

(57) **Zusammenfassung**

Die Erfindung betrifft ein Verfahren zum Test wenigstens eines elektronischen Steuerungssystems durch Ausführung wenigstens eines Testmodells auf mindestens zwei bidirektional austauschenden Systemen, wobei wenigstens eines der Systeme ein zur Ausführung von Umgebungs- und Testmodellen unter Echtzeitbedingungen geeigneter Simulationsrechner ist, wenigstens das erste System und zweite System zur Ausführung von Testmodellen und/ oder speziellen Testmodellanteilen geeignet sind und das Steuerungssystem über einen Datenkanal mit dem Simulationsrechner in Verbindung steht, das Testmodell auf dem ersten System ausgeführt wird und durch Kommunikation mit einem zweiten System Teile des Testmodells auf dem zweiten System ausgeführt und/oder an das zweite System übermittelt und anschließend ausgeführt werden.

Ferner betrifft die Erfindung eine zugehörige Testvorrichtung.

## Beschreibung

Die Erfindung betrifft ein Verfahren zum Test eines elektronischen Steuerungssystems durch Ausführung wenigstens eines ersten Testmodells auf mindestens zwei bidirektional austauschenden Systemen, wobei wenigstens eines der Systeme ein zur Ausführung von Simulations- und Testmodellen unter Echtzeitbedingungen geeigneter Simulationsrechner ist. Des weiteren betrifft die Erfindung ein Verfahren zur steuerbaren Ausführung wenigstens eines weiteren Testmodells durch wenigstens ein erstes Testmodell. Schließlich betrifft die Erfindung eine Testvorrichtung zur Ausführung der genannten Verfahren.

Verfahren und Vorrichtungen zum Test von elektronischen Steuerungssystemen sind aus der Praxis in verschiedener Form bekannt und werden vor allem in der angewandten Forschung und der industriellen Entwicklung in dem weiten Feld der Entwicklung und dem Einsatz elektronischer Steuerungssysteme verwendet, nämlich überall dort, wo im weitesten Sinne Prozesssteuerungsaufgaben gelöst werden müssen. Der Begriff "Steuerungssystem" wird im Folgenden als umfassende Bezeichnung für eine technische Einrichtung verwendet, die im wesentlichen für die Aufgaben Messen, Steuern, Regeln, Kalibrieren eingesetzt wird. Im weitesten Sinne handelt es sich dabei generell um ein elektronisches, programmsteuerbares System, das im Bereich automotiver Anwendungen üblicherweise Steuergerät genannt wird. Der Begriff "Steuerungssystem" ist nicht auf das beschränkt, was im systemtheoretischen Sinne einengend als Steuerung definiert wird, üblicherweise werden Regelungen auf Steuerungssystemen implementiert.

Die Entwicklung eines letztlich in der Serienfertigung einsetzbaren Steuerungssystems vollzieht sich meist in den folgenden Schritten: In der Funktionsentwicklung wird mit Hilfe von mathematischen Modellierungswerkzeugen zunächst ein von der späteren Zielhardware und -umgebung abstrakter Reglerentwurf vorgenommen, wobei der so entwickelte Regler lediglich in einer Simulation mit dem ebenfalls nur als mathematisches Modell existierenden Prozessabbild erprobt wird.

In einem nächsten Schritt, bei dem sogenannten Rapid Control Prototyping (RCP), wird der abstrakte Reglerentwurf mit Hilfe von Code-Generatoren und Interpretern in ein ausführbares Programm übersetzt, das auf einem üblicherweise sehr leistungsstarken - und mit dem letztlich zum Einsatz kommenden Serien-Steuerungssystem nicht vergleichbaren - echtzeitfähigen Steuerungssystem betrieben wird. Dieses RCP-Steuerungssystem interagiert dann über entsprechende I/O-Schnittstellen mit dem realen zu beeinflussenden Prozess. Sind diese Ergebnisse zufriedenstellend, wird wiederum über entsprechend ausgestattete Code-Generatoren sowie Interpreter aus dem mathematischen Modell des Reglers ausführbarer Code für das Serien-Steuerungssystem generiert, so dass das in der Serienanwendung tatsächlich zum Einsatz kommende Steuerungssystem mit der Funktionalität ausgestattet wird, mit der es auch in der Serienanwendung ausgestattet sein muss.

Bevor das Serien-Steuerungssystem jedoch in Zusammenhang mit dem realen Prozess erprobt wird, wird es eingehenden Tests unterzogen, sogenannten Hardware-in-the-Loop-Tests (HIL-Tests). Bei HIL-Tests wird das (Serien-)Steuerungssystem mit einer Testvorrichtung verbunden, wobei auf der Testvorrichtung mit Hilfe eines Umgebungsmodells die funktionale Umgebung des zu testenden Steuerungssystems simuliert wird; das Steuerungssystem wechselwirkt also mit einer virtuellen Umgebung, indem das Umgebungsmodell durch Ausgabe von Umgebungsmodelldaten über die Testvorrichtung an das Steuerungssystem und durch Aufnahme von Steuerungssystemdaten aus dem Steuerungssystem über einen Datenkanal mit der Testvorrichtung in Verbindung steht.

Die vorliegende Erfindung wird am Beispiel eines solchen HIL-Tests erläutert, sie ist jedoch begrifflich nicht auf eine solche Testsituation beschränkt, vielmehr ist sie auf den Test eines beliebigen Steuerungssystems anwendbar, das mit einer Testvorrichtung in Verbindung steht und mittels eines Umgebungsmodells überprüft wird, das auf der Testvorrichtung betrieben wird.

Bei dem Steuerungssystem kann es sich beispielsweise im Bereich automotiver Anwendungen um ein Motor-Steuergerät handeln, wobei das Umgebungsmodell dieses Motor-Steuergeräts dann ein Motor-Modell ist, das in Echtzeit auf der Testvorrichtung betrieben wird. Genauso könnte es sich aber auch um ein fahr- und motordynamisches Modell eines ganzen Fahrzeugs handeln, das in einer virtuellen Umgebung bewegt wird. Das Umgebungsmodell muß grundsätzlich nicht alle Schnittstellen des zu testenden Steuerungssystems abdecken, vielmehr können auch beliebige Teile der Umgebung durch reale Komponenten implementiert sein. Im vorangehenden Beispiel könnte dies bedeuten, dass das zu testende Steuerungssystem tatsächlich mit einem realen Verbrennungsmotor verbunden ist, wobei die Umgebung des Motors (z. B. Getriebe, Antriebsstrang, Fahrgestell und Straße) mit Hilfe eines auf der Testvorrichtung betriebenen Umgebungsmodells nachgebildet ist. Das Umgebungsmodell muss also kein vollständiges Umgebungsmodell sein, es kann direkt und/oder indirekt mit dem zu testenden Steuerungssystem in Verbindung stehen.

Der eigentliche Test des Steuerungssystems besteht darin, dass das Umgebungsmodell des Steuerungssystems in gezielter Weise beeinflusst wird, nämlich durch ein Testmodell zur Beeinflussung des Umgebungsmodells. Eine solche gezielte Beeinflussung kann beispielsweise beim Test eines Steuerungssystems für Bremssysteme darin liegen, dass die den Untergrund beschreibenden Parameter in weiten Grenzen variiert werden und das Brems-Steuerungssystem jeweils zur Vollbremsung veranlasst wird. Dabei wird zur Beurteilung des Steuerungssystems meist das Verhalten des Umgebungsmodells herangezogen, das im vorangehenden Beispiel in der Ermittlung der (durch Bremsen verursachten) Verzögerung des Gesamtsystems - also des Fahrzeugs - liegen könnte. Genauso gut ist es möglich, auch direkt Zustandsvariablen aus dem Steuerungssystem auszulesen und zur Beurteilung des Steuerungssystems heranzuziehen. Solche Testmodelle können aus verschiedenen einzelnen Testmodellen zusammengesetzt werden und viele einzelne Schritte umfassen, aber auch lediglich aus einem einzelnen Testschritt bestehen. Weiterhin ist es möglich, dass ein Testmodell untergeordnete Teile beinhaltet, die bspw. im Falle spezieller auftretender Bedingungen de- oder aktiviert werden.

Üblich, aber nicht zwingend für die zuvor aufgezeigten Beispiele ist ein Bezug zur Echtzeit, d.h. dass im Rahmen regelungstechnischer Aufgabenstellungen gewisse Anforderungen an die auf eine Beeinflussung reagierenden Systeme gestellt werden. Der Einbezug zeitlicher Anforderungen beinhaltet also eine Erweiterung der Anforderungen im Gegensatz zur Forderung nach rein logischer Korrektheit eines Testvorgangs. Bei zeitkritischen Systemen (sog. Echtzeit-Systemen) muss insbesondere die Anforderung der Rechtzeitigkeit erfüllt werden; das heißt, dass Vorgänge, die beispielsweise zu einem bestimmten Zeitpunkt ausgeführt sein müssen, exakt zu dem benannten Zeitpunkt (oder früher) ausgeführt worden sind. Dabei ist zu beachten, dass Rechtzeitigkeit nicht meint, ein Vorgang müsse schnellstmöglich ausgeführt werden, sondern die sichere und vorhersagbare Ausführung eines Vorgangs innerhalb einer dafür vorgegebenen Zeit angestrebt ist. Ferner wird üblicherweise von deterministischen Systemen ausgegangen, d.h. eine Reaktion ist bei gleichen Voraussetzungen eines Systems immer exakt vorhersehbar und reproduzierbar.

Üblicherweise werden zeitdiskrete Systeme, welche bestimmten Echtzeitanforderungen unterliegen, mit einer bestimmten - meist festen - Berechnungs- und Abtastfrequenz betrieben. Diese Frequenz ist i.d.R. so gewählt, dass ein hieraus resultierendes Verhalten eines beeinflussten Steuerungssystems derart abgebildet werden kann, dass die durch die Rasterung des realen Verhaltens des Systems entstehende Ungenauigkeit im Sinne des durchzuführenden Tests vernachlässigt werden kann. Eine solche Berechnungs- und Abtastfrequenz kann auch als Modelltakt bezeichnet werden.

Aus dem Stand der Technik sind verschiedene Verfahren und Vorrichtungen bekannt, ein Steuergerät einem Test zu unterziehen.

Beispielsweise sieht eine Aufgabenstellung vor, dass an einer Testvorrichtung, auf welcher ein Umgebungsmodell läuft, eine Experimentiervorrichtung - in der Regel ein Standard-PC - betrieben wird. Ein Testmodell, welches auf der Experimentiervorrichtung ausgeführt wird, beeinflusst über eine bidirektionale Datenverbindung das Verhalten des Umgebungsmodells und/ oder den Wert von Zustandsvariablen im Steuerungssystem. Dabei gestattet die Experimentiervorrichtung, das Testmodell mit einer grafischen Modellierungsumgebung zu entwerfen, wobei in Abhängigkeit von Modellgrößen des Umgebungsmodells sowie zeitlich und funktional bestimmbarer Abfolgen und Abhängigkeiten eine bestimmte Testfunktionalität vorgegeben werden kann. Unabhängig von derartiger Funktionalität können Testmodelle auch in Form herkömmlich entworfener Skripte bereitgestellt und verwendet werden (dSPACE GmbH: "AutomationDesk: Test and Experiment Software"; Februar 2006). Das zuvor beschriebene Verfahren wird im Folgenden als Verfahren I bezeichnet.

Nachteilig bei diesem Verfahren ist, dass eine strenge Synchronisation zwischen dem Umgebungsmodell auf der Testvorrichtung und dem Testmodell auf der Experimentiervorrichtung nicht gewährleistet werden kann, da die Kopplung zwischen den beiden Vorrichtungen mit den die Kommunikation betreffenden Totzeiten verbunden ist. Daraus ergibt sich, dass eine in einem bestimmten Berechnungsintervall des Umgebungsmodells geplante Beeinflussung des Umgebungsmodells durch das Testmodell nicht immer auch in diesem Berechnungsintervall stattfinden kann, was möglicherweise zur Fehlausführung des Tests und Fehlinterpretation der Testergebnisse durch einen Anwender oder nachgeschaltete Auswertungsprogramme führen kann.

Ferner ist es im Rahmen dieses Verfahrens möglich, ein Umgebungsmodell auf einer verteilten Testvorrichtung auszuführen. Dazu ist es notwendig, das Umgebungsmodell um entsprechende Funktionalitäten zu erweitern, dass der Betrieb auf einer verteilten Testvorrichtung vorgenommen werden kann. Diese Erweiterung geschieht üblicherweise vor der Kompilierung eines Umgebungsmodells. Eine solche verteilte Testvorrichtung stellt eine erweiterte Testvorrichtung dar, die über höhere Rechenleistungen verfügt sowie i.d.R. mehr oder weitere Ressourcen zum Einsatz z.B. in einem Steuergerätetest anbietet. Dazu werden übliche Testvorrichtungen über schnelle Datenverbindungen derart verbunden, dass die wenigstens zwei Testvorrichtungen miteinander bidirektional Daten austauschen können. Dabei kann es je nach Konzeption des Datenaustauschverfahrens zu verfahrensimmanenten Verzögerungen kommen, beispielsweise wenn der Datenaustausch über einen aus dem jeweiligen Teil des Umgebungsmodells während der Ausführung startenden Dienst erfolgt; in einem solchen Beispiel etwa bewirkt das Datenaustauschverfahren eine Verzögerung um einen oder mehr Modelltakte je Stufe einer kaskadierten Testvorrichtungsverschaltung.

Nachteilig ist ebenfalls, dass die unter Berücksichtigung von Echtzeitkriterien geforderte Qualität der Synchronisation zwischen dem Umgebungsmodell auf der verteilten Testvorrichtung und dem Testmodell auf der Experimentiervorrichtung aus den zuvor genannten Gründen nicht gewährleistet werden kann.

Ein anderes, aus dem Stand der Technik bekanntes Verfahren sieht vor, dass ein Testmodell direkt aus einem Umgebungsmodell heraus ausgeführt wird, indem geplante Testvorgänge bereits als dezidierter Bestandteil des Umgebungsmodells implementiert werden bzw. an fest vorgesehenen Stellen durch das Umgebungsmodell aufgerufen werden (OPAL-RT Technologies Inc.: "RT-LAB, Product Description, Feature Details, Typical Applications"; 2005).

Nachteilig bei diesem aus dem Stand der Technik bekannten Verfahren ist, dass ein solches Verfahren über eingeschränkte Flexibilität verfügt, wenn beispielsweise der Aufruf eines Testmodells zu einem anderen Zeitpunkt als dem im Modell implementierten Zeitpunkt erfolgen soll. Kennzeichnend dafür ist die Tatsache, dass das Umgebungsmodell auch dann geändert werden muss, wenn lediglich Bestandteile der Testfunktionalität (-also des Testmodells -) geändert werden; insbesondere zur Laufzeit eines Tests ist diese Vorgehensweise praktisch nicht bzw. nur in sehr engen Grenzen möglich. Ferner schafft die Instrumentierung des Umgebungsmodells mit speziellen, das Testmodell betreffenden Funktionsaufrufen einen erheblichen Overhead innerhalb des Umgebungsmodells und führt unter Umständen zu erheblichen Laufzeit-Nachteilen.

Schließlich ist aus der europ. Patentanmeldung mit dem Az. EP 06/018 945 3 (Einreichung vom 11. September 2006) ein Verfahren zum Test eines elektronischen Steuerungssystems bekannt, wobei insbesondere wenigstens ein Testmodell neben dem Umgebungsmodell auf der Testvorrichtung ausgeführt wird, dieses eine funktionale Unabhängigkeit aufweist und - im Testbetrieb - synchron mit dem Umgebungsmodell ausgeführt wird.

Diese synchrone Ausführung eines Testmodells und eines Umgebungsmodells auf einer Testvorrichtung benötigt in einem exemplarischen Experimentaufbau, welchem eine spezifizierte Berechnungs- und Abtastfrequenz zugrunde liegt, ein die Synchronisierung steuerndes Modell bzw. einen die Ausführung beider Modelle - des Test- sowie des Umgebungsmodells - steuernden übergeordneten Mechanismus. Ein solcher Mechanismus kann beispielsweise durch einen Zeitgeber realisiert werden, welcher zu Beginn einer auf der Berechnungs- und Abtastfrequenz fußenden Zeiteinheit die Ausführung des für diese Zeiteinheit relevanten Umgebungs- und Testmodellanteils bewirkt. Weiterhin kann ein solcher Mechanismus Mittel enthalten, die das Einhalten von Echtzeitkriterien überprüfen und beispielsweise bei Überschreiten der zulässigen Zeitvorgaben Fehlereinträge vornehmen oder weitere, zu spezifizierende Aktionen ausführen.

Insbesondere Aufgabenstellungen mit sehr hohen Anforderungen an Echtzeitbedingungen und Synchronität können mit dieser Vorgehensweise sehr viel genauer gelöst werden als mit dem oben beschriebenen Verfahren; nachteilig hingegen ist, dass die oftmals durch sehr große Umgebungsmodelle stark ausgelasteten Rechenkapazitäten einer Testvorrichtung weiter ausgeschöpft werden, da nach Maßgabe dieser Vorgehensweise die Berechnung des Testmodells auf der Testvorrichtung stattfindet.

Weiterhin können Tests die Anforderung beinhalten, weitere Geräte oder Systeme dergestalt in ein Experiment zu integrieren, dass durch solche Geräte oder Systeme bereitgestellte Informationen durch das Testmodell verarbeitet werden können. Dies wird im Folgenden exemplarisch anhand der Einbindung eines herkömmlichen Diagnosegeräts mittels Standardschnittstellen in einem Steuergerätetest erläutert.

Herkömmliche Steuergeräte verfügen üblicherweise über die - eingeschränkte - Möglichkeit, ein Fehlverhalten des zu steuernden realen Systems zu erkennen, zu bewerten und in einem internen Fehlerspeicher abzulegen. Dies dient insbesondere dazu, die Wartung eines solchen Systems zu vereinfachen und erste Informationen über das Fehlverhalten bereitzustellen. Im Bereich der Automobiltechnik etwa werden diese Informationen - zumeist - in Form von sog. Fehlercodes in einem im Steuergerät verankerten internen Fehlerspeicher bereitgestellt. Mittels herkömmlicher Diagnosegeräte können diese Fehlercodes ausgelesen werden und auf einem weiteren System - in der Regel ein über herkömmliche Schnittstellen angeschlossener Standard-PC, seltener eine einfache Fehlercode-Anzeigevorrichtung - angezeigt werden.

Sehen also die Anforderungen an ein durchzuführendes Experiment den automatisierten Zugriff auf solche Diagnosegeräte vor, so bedarf es einer herkömmlichen Schnittstelle, mittels welcher eine Diagnosegerät-Steuerung (teil-)automatisiert vorgenommen werden kann; solche Schnittstellen - z.B. USB - sind in der Regel in einer dem Verfahren entsprechenden Experimentiervorrichtung vorhanden, nicht hingegen in der Testvorrichtung.

Ein Diagnosegerät lässt sich beispielsweise einbeziehen, wenn das oben beschriebene Verfahren I angewendet wird: Ein Testmodell wird auf einer Experimentiervorrichtung ausgeführt und greift mittels einer bidirektionalen Verbindung auf ein auf einer Testvorrichtung ausgeführtes Umgebungsmodell zu. Diagnosefunktionen können sehr einfach genutzt werden, da Diagnosegeräte über eine in der Experimentiervorrichtung üblicherweise vorhandene Schnittstelle gesteuert und/ oder abgefragt werden können.

Die genannte Herangehensweise ist ferner mit den weiteren aus dem Stand der Technik bekannten Verfahren nicht lösbar oder mit hohem zusätzlichen Aufwand verbunden. Würde das Testmodell neben dem Umgebungsmodell auf der Testvorrichtung ausgeführt, ist der direkte Zugriff auf ein Diagnosegerät aufgrund des Fehlens einer geeigneten Schnittstelle nicht möglich. Ein denkbarer Lösungsansatz bestünde aus einer geeigneten Erweiterung der Testvorrichtung um eine Schnittstelle; bedingt durch weitere Kapazitätsanforderungen der Schnittstellensoftware würde ein solches Vorgehen weitere Einschränkungen der Rechenkapazität bewirken. Es bestünde ferner die Möglichkeit, die Algorithmik eines Diagnosegerätes als weiteres Modell, z.B. Diagnosemodell, ebenfalls auf der Testvorrichtung auszuführen. Diese und jede weitere Verlagerung - auch in Teilen - einer durch ein Diagnosegerät bereitgestellten Diagnosefunktionalität auf die Testvorrichtung wird in jeder denkbaren Variante immer eine - zumindest geringfügige
- Einschränkung der Rechenkapazität der Testvorrichtung bewirken. Da solche Einschränkungen - egal welchen Ausmaßes - im Rahmen der genannten Testverfahren nicht wünschenswert sind, bietet sich diese Lösungsansätze nicht an.
   Der Erfindung liegt daher die Aufgabe zugrunde, ein Verfahren und eine Vorrichtung zum Test eines elektronischen Steuerungssystems anzubieten, bei denen die oben genannten Nachteile - zumindest teilweise - vermieden werden.
   Die Aufgabe wird durch das in Anspruch 1 angegebene Verfahren und die in Anspruch 13 angegebene Testvorrichtung gelöst. Vorteilhafte Weiterbildungen des erfindungsgemäßen Verfahrens sind Gegenstand der abhängigen Ansprüche 2 bis 12 sowie 14 bis 15.
   Grundlegend für ein solchen gemäß der vorliegenden Erfindung durchgeführtes Testverfahren ist das Vorhandensein wenigstens zweier ähnlicher Einzelsysteme, die häufig - aber nicht zwangsweise - autonom re- und agieren können, einer - üblicherweise - bidirektionalen Datenverbindung sowie eine spezifische systembedingte Abhängigkeit zwischen den Systemen. Eine derartige systembedingte Abhängigkeit entsteht beispielsweise durch den Betrieb eines komplexen Umgebungsmodells auf einer verteilten Testvorrichtung; hier wird deutlich, dass ein auf mehreren Testvorrichtungen ausgeführtes Gesamtmodell einen kontextuellen (systembedingten) Zusammenhang aufweist. Andererseits muss die Ähnlichkeit der Einzelsysteme nicht zwingend in Form von Baugleichheit vorliegen - denkbar ist auch eine Ähnlichkeit, die es ermöglicht, eine spezifische (Teil-)Berechnung von einem ersten auf ein zweites System zu verlagern; hier ist lediglich ähnlich, dass die Berechnung auf beiden Systemen durchgeführt werden könnte. Schließlich ist denkbar, dass der systembedingte Zusammenhang sich dadurch äußert, dass bestimmte Berechnungs-, Mess-, Steuer- und/ oder Regelvorgänge nur auf einem der wenigstens zwei Systeme möglich ist und demzufolge das zur Ausführung konzipierte System dem eigentlichen Testverfahren ergänzend zur Verfügung steht. Zwangsläufig ist in einer solchen Konstellation gemeinsames Merkmal der wenigstens zwei Systeme die das Testverfahren fördernde bzw. ermöglichende Kommunikation zwischen den Systemen. Demzufolge ist es denkbar, einen im Sinne der vorliegenden Erfindung konzipierten Testaufbau derart zu gestalten, dass eines der wenigstens zwei Systeme eine Experimentiervorrichtung - in der Regel ein Standard-PC - und ein weiteres der wenigstens zwei Systeme eine Testvorrichtung ist.
   Die zuvor aufgezeigte Aufgabe ist erfindungsgemäß nach einer ersten Lehre der Erfindung bei einem Verfahren zum Test wenigstens eines elektronischen Steuerungssystems durch Ausführung wenigstens eines Testmodells auf mindestens zwei bidirektional austauschenden Systemen, wobei wenigstens eines der Systeme ein zur Ausführung von Umgebungs- und Testmodellen unter Echtzeitbedingungen geeigneter Simulationsrechner ist, wenigstens das erste und zweite System zur Ausführung von Testmodellen und/oder Testmodellanteilen geeignet sind und das Steuerungssystem über einen Datenkanal mit dem Simulationsrechner in Verbindung steht, das Testmodell auf dem ersten System ausgeführt wird und nach Kommunikation mit einem zweiten System Teile des Testmodells auf dem zweiten System ausgeführt oder an das zweite System übermittelt und anschließend ausgeführt werden, gelöst.
   Weiterhin wird die zuvor aufgezeigte Aufgabe erfindungsgemäß nach einer weiteren Lehre der Erfindung mittels der Testvorrichtung, mindestens zwei bidirektional austauschende Systeme umfassend, zum Test wenigstens eines elektronischen Steuerungssystems durch Ausführung wenigstens eines Testmodells auf der Testvorrichtung, wobei wenigstens eines der Systeme ein zur Ausführung von Umgebungs- und Testmodellen unter Echtzeitbedingungen geeigneter Simulationsrechner ist und wenigstens das erste und zweite System zur Ausführung von Testmodellen und/ oder speziellen Testmodellanteilen geeignet ist, das Testmodell auf dem ersten System ausführbar ist und nach Kommunikation mit einem zweiten System Teile des Testmodells auf dem zweiten System ausführbar sind bzw. nach Übermittlung an das zweite System ausführbar sind, gelöst.
   Das erfindungsgemäße Verfahren ist gegenüber dem aus dem Stand der Technik bekannten Verfahren in vielerlei Hinsicht vorteilhaft. In einem exemplarischen Steuergerätetest gemäß dem beschriebenen Verfahren wird beispielsweise ein Testmodell auf dem ersten System - beispielsweise einer Testvorrichtung - ausgeführt, dieses überträgt mittels Kommunikation Teile des Testmodells auf ein zweites System - beispielsweise eine Experimentiervorrichtung, in der Regel ein Standard-PC - und veranlasst die dortige Ausführung. Eine solche Architektur ermöglicht es, den Anforderungen gemäß der gestellten Aufgabe zu genügen, indem durch Kommunikation ermöglicht wird, Teile des Testmodells von einem ersten System - beispielsweise ein Simulationsrechner - auf ein zweites System
- beispielsweise eine Experimentiervorrichtung mit über Standardschnittstellen angeschlossenem Diagnosegerät - zu übertragen und die Ausführung der übertragenen Teile des Testmodells auf dem zweiten System zu veranlassen. In einem weiteren exemplarischen Experimentaufbau veranlasst ein auf einem ersten System - beispielsweise eine Experimentiervorrichtung - ausgeführtes Testmodell die Übermittlung von Teilen des Testmodells, die besonders hohen Anforderungen an die Qualität von Echtzeitkriterien unterliegen, an ein zweites System - beispielsweise einen Simulationsrechner - sowie die dortige Ausführung der Teile des Testmodells.

In einer vorteilhaften Ausgestaltung des erfindungsgemäßen Verfahrens befinden sich auf wenigstens zwei der austauschenden Systeme Testmodellinterpreter, welche das Testmodell bzw. die Teile des Testmodells übersetzen und ausführen. Diese Ausgestaltung bietet insbesondere Vorteile bei der Entwicklung der Testmodelle. Die Kompilierung solcher Testmodelle kann je nach Ausgestaltung des Interpreters entfallen bzw. das Testmodell kann durch einen sog. JIT-Kompiler (Just-in-Time) ressourcenschonend zur Laufzeit übersetzt und ausgeführt werden. Ebenfalls gestattet eine solche Vorgehensweise eine erhöhte Portierbarkeit der Testmodelle, insbesondere bei Verwendung von Testvorrichtungen unterschiedlichen Typs bzw. unterschiedlicher Bauweise, da die für eine spezifische Zielplattform optimierte Kompilierung eines Modells entfällt.

Nach einer bevorzugten Ausgestaltung des erfindungsgemäßen Verfahrens wird die Ausführung des Testmodells bzw. der Teile des Testmodells auf dem ersten System so lange unterbrochen, bis die Ausführung der an das zweite System übermittelten Teile des Testmodells beendet ist. Insbesondere wird diese bevorzugte Ausgestaltung durch Übermittlung einer Information vom ersten an das zweite System bzw. nach Beendigung der Ausführung auf dem zweiten System von diesem an das erste System gestaltet. Ein derartiges Verfahren findet beispielsweise in einem Experimentaufbau Anwendung, in welchem ein auf einer Testvorrichtung ausgeführtes Testmodell Informationen aus einem an einer Experimentiervorrichtung angebrachten Diagnosegerät benötigt, bevor weitere Aktionen des auf der Testvorrichtung ausgeführten Testmodells erfolgen sollen.

Eine weitere Ausgestaltung des erfindungsgemäßen Verfahrens zeichnet sich dadurch aus, dass die Ausführung des Testmodells auf dem ersten System nach Übermittlung der Teile des Testmodells an das zweite System parallel stattfindet. Ein dergestaltes Verfahren kann beispielsweise in einem Experimentaufbau Anwendung finden, wenn ein auf einem ersten System - beispielsweise einer Testvorrichtung - ausgeführtes Testmodell umfangreiche Testergebnisse zur Analyse und Weiterverarbeitung mittels Kommunikation an ein zweites Gerät - beispielsweise eine Datenspeichervorrichtung - übermittelt.

Nach einer weiteren vorgesehenen Ausgestaltung des erfindungsgemäßen Verfahrens erfolgt die Ausführung des Testmodells bzw. der Teile des Testmodells auf dem ersten und zweiten System synchronisiert. Vor allem der Gebrauch eines wie aus dem Stand der Technik bekannten verteilten Systems - beispielsweise wenigstens zwei synchron arbeitende Testvorrichtungen, auf denen jeweils Teile des Umgebungsmodells aufgeführt werden - erfordert die Einhaltung einer gewissen Synchronität. Beispielsweise muss die Ausführung von Teilen eines Testmodells auf einem zweiten System - beispielsweise einer zweiten Testvorrichtung - synchron bzw. um eine entsprechende Anzahl von Modelltakten gemäß der systemimmanenten Abtastfrequenz synchronisiert verschoben sein, um eine deterministische oder logisch korrekte Ausführung eines Testmodells auf mehreren Testvorrichtungen vorzunehmen.

Eine weitere Ausgestaltung sieht vor, dass durch Ausführung eines Testmodells oder Teil eines Testmodells auf einem zweiten System - durch Ausführung eines Testmodells oder Teil eines Testmodells auf einem ersten System - die Ausführung eines Testmodells oder Teile eines Testmodells auf wenigstens einem weiteren System bewirkt. Beispielsweise kann in einem exemplarischen Experimentaufbau ein Testmodell auf einem ersten System - beispielsweise eine Testvorrichtung - die Ausführung von Teilen des Testmodells auf einem weiteren System - beispielsweise eine weitere Testvorrichtung - bewirken; diese Teile des Testmodells wiederum benötigen beispielsweise Informationen aus einem an einem dritten System - beispielsweise eine Experimentiervorrichtung - angeschlossenen Diagnosegerät und bewirken demzufolge eine weitere Ausführung von Teilen des Testmodells auf dem dritten System.

Gemäß einer besonders bevorzugten Ausgestaltung des erfindungsgemäßen Verfahrens kann von einem auf einem ersten System ausgeführten Testmodell anstelle von Teilen des Testmodells ein komplettes weiteres Testmodell entweder übertragen werden, oder - sofern auf dem zweiten System bereits vorhanden - ein weiteres Testmodell durch einen über Kommunikationsmittel gesteuerten Aufruf auf dem zweiten System zur Ausführung gebracht werden. Diese Ausgestaltung ermöglicht eine einfach zu realisierende Verknüpfung verschiedenster Testmodelle, ohne jeweils gewünschte - und möglicherweise bereits in Form von eigenständigen Testmodellen vorliegende - Testfunktionalität in Form von Teilen eines Testmodells in ein gemeinsames, neues Testmodell integrieren zu müssen. Ferner ermöglicht insbesondere die Variante des gesteuerten Aufrufs eines Testmodells eine die Ressourcen der Kommunikationsmittel schonende Vorgehensweise.

Insbesondere ist es keine zwingende Eigenschaft des erfindungsgemäßen Verfahrens, dass eine Übermittlung in einem festen Zeitrahmen zu erfolgen hat, vielmehr sind solche Eigenschaften unter Einbezug des konkret zu realisierenden Experimentaufbaus entsprechend zu gestalten. Die Übermittlung von umfangreichen Testergebnissen beispielsweise an ein weiterverarbeitendes System kann durchaus parallel und asynchron zur Ausführung des Testmodells auf dem ersten System erfolgen; andererseits besteht die Möglichkeit, das Anstarten eines weiteren Testmodells auf einem zweiten System zwingend synchron zu spezifischen Aktionen des Testmodells auf einem ersten System zu bewirken.

Eine weitere Lehre des erfindungsgemäßen Verfahrens ermöglicht es, anstelle von Teilen eines Testmodells Testergebnisse an ein weiteres System zu übertragen. Im Sinne des Verfahrens wird durch das Testmodell auf dem ersten System - beispielsweise eine Testvorrichtung - eine über Kommunikationsmittel zu bewirkende Übertragung von Testergebnissen auf ein zweites System - beispielsweise eine Experimentiervorrichtung mit einem zur Datenauswertung geeigneten Funktionsanteil - vorgenommen.

Nach einer weiteren Lehre der Erfindung ist die zuvor aufgezeigte Aufgabe erfindungsgemäß bei einer mindestens zwei bidirektional austauschende Systeme umfassenden Testvorrichtung zum Test wenigstens eines elektronischen Steuerungssystems durch Ausführung wenigstens eines Testmodells auf der Testvorrichtung dadurch gelöst, dass das Testmodell auf dem ersten System ausgeführt wird und durch Kommunikation mit einem zweiten System Teile des Testmodells auf dem zweiten System ausgeführt bzw. an das zweite System übermittelt und anschließend ausgeführt werden oder Testergebnisse des ersten Testmodells an das zweite System übermittelt werden.

Die erfindungsgemäße Testvorrichtung ist in weiteren bevorzugten Ausführungsbeispielen weiterhin so ausgestaltet, dass mit ihr die Verfahrensschritte durchführbar sind, die im Rahmen dieser Erfindung hinsichtlich des Tests von elektronischen Steuerungsystemen beschrieben sind.

Im einzelnen gibt es nun eine Vielzahl von Möglichkeiten, das erfindungsgemäße Verfahren und die Testvorrichtung zum Test eines elektronischen Steuerungssystems auszugestalten und weiterzubilden. Dabei wird sowohl auf die den Patentansprüchen 1 und 13 nachgeordneten Patentansprüche als auch auf die Beschreibung von in der Zeichnung dargestellten Ausführungsbeispielen des erfindungsgemäßen Verfahrens und der Testvorrichtung verwiesen. In den Zeichnungen zeigen
- Fig. 1: eine schematische Darstellung eines Ausführungsbeispiels, bestehend aus einer Testvorrichtung und einem elektronischen Steuerungssystem,
- Fig. 2: eine schematische Darstellung eines Ausführungsbeispiels, bestehend aus einer Testvorrichtung und einem elektronischen Steuerungssystem, insbesondere bezogen auf eine bevorzugte Ausführung gemäß Anspruch 2,
- Fig. 3: mit den Varianten 3a bis 3c verschiedene mögliche Ausführungen von zeitlichem Verhalten zweier Testmodelle bzw. Teile eines Testmodells,
- Fig. 4: eine schematische Darstellung eines weiteren Ausführungsbeispiels, bestehend aus einer Testvorrichtung und einem elektronischen Steuerungssystems, insbesondere bezogen auf eine bevorzugte Ausführung gemäß Anspruch 7,
- Fig. 5: eine weitere schematische Darstellung eines weiteren Ausführungsbeispiels des erfindungsgemäßen Testverfahrens, bestehend aus einer Testvorrichtung und einem angeschlossenen Steuerungssystem und
- Fig. 6: einen exemplarischen Experimentaufbau als bevorzugtes Ausführungsbeispiel des erfindungsgemäßen Testverfahrens, bestehend aus einer Testvorrichtung, einem angeschlossenen Steuerungssystem, einer Experimentiervorrichtung und einem weiteren Gerät, hier exemplarisch einem Diagnosegerät.

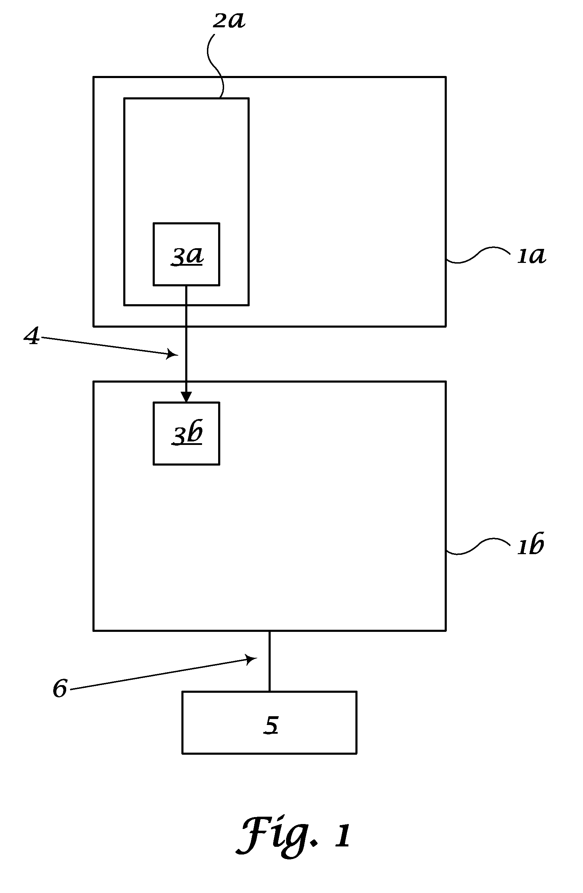

Die Fig. 1 bis 6 zeigen anhand verschiedener Ausführungsbeispiele jeweils bestimmte Aspekte des erfindungsgemäßen Testverfahrens und der Testvorrichtung gemäß der aufgeführten Ansprüche. Aus Gründen der Übersichtlichkeit wurde in den Figuren und Beschreibungen zu den Figuren zu Gunsten eines besseren Verständnisses des erfindungsgemäßen Verfahrens eine reduzierte Darstellung der bevorzugten Ausführungsbeispiele dargebracht. Insbesondere ist gemäß dem beschriebenen Verfahren ein auf einem Simulationsrechner ausgeführtes Umgebungsmodell - zumeist - Bestandteil eines solchen Verfahrens.

Fig. 1 zeigt den typischen Aufbau einer Testumgebung zum Test eines elektronischen Steuerungssystems 5, das zur Durchführung des erfindungsgemäßen Verfahren geeignet ist. Das zu testende Steuerungssystem 5 ist hier über einen Datenkanal 6 mit einer Testvorrichtung, bestehend aus zwei bidirektional austauschenden Systemen 1a, 1b verbunden. Die Systeme 1a, 1b sind über eine bidirektionale Verbindung 4 verbunden. Auf dem System 1a wird ein Testmodell 2a mit einem zu übermittelnden Testmodellanteil 3a ausgeführt; der Testmodellanteil 3a wird durch Kommunikation über die bidirektionale Verbindung 4 auf das System 1b übertragen und dort als übertragener Testmodellanteil 3b ausgeführt. Im Rahmen einer Ausführungsform könnte ein solcher Aufbau exemplarisch aus zwei Simulationsrechnern bestehen; ein Testmodell wird auf dem ersten Simulationsrechner ausgeführt und übermittelt Teile des Testmodells an einen weiteren Simulationsrechner zur dortigen Ausführung.

Denkbar ist weiterhin eine Ausführungsform, derzufolge eines der beiden Systeme 1a oder 1b neben der Möglichkeit, ein (oder mehrere) Testmodell(e) 2 bzw. Testmodellanteile 3 auszuführen, auch als Experimentiervorrichtung eingerichtet ist.

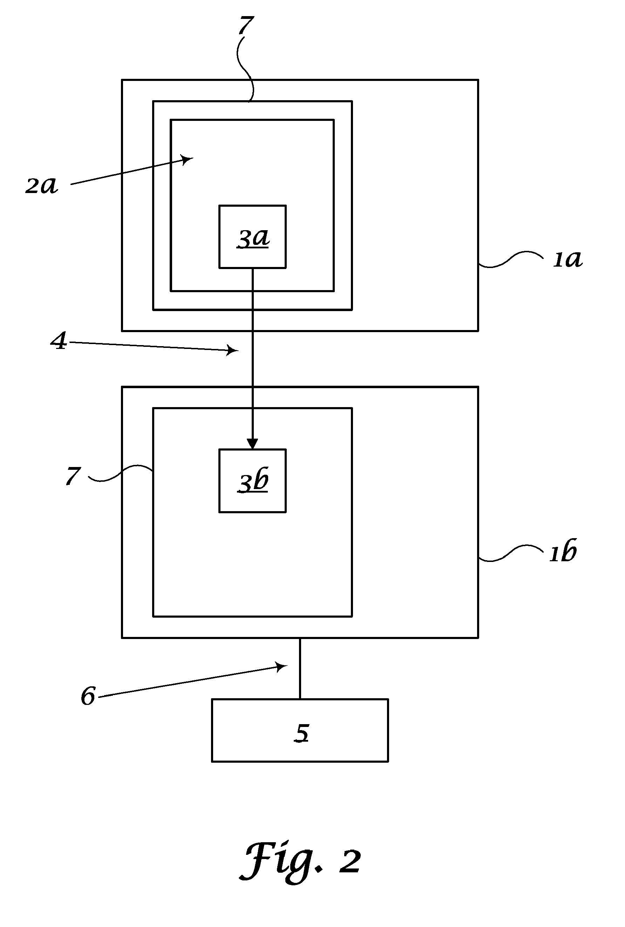

Gemäß der Darstellung in Fig. 2 befindet sich auf den jeweiligen Systemen 1a, 1b der Testvorrichtung ein Testmodellinterpreter 7, welcher zur Ausführung von Testmodellen vorgesehen ist. Ein Testmodell 2a wird durch den Interpreter 7 ausgeführt und beinhaltet einen zu übertragenden Testmodellanteil 3a, welcher dem auf dem zweiten System 1b vorhandenen weiteren Testmodellinterpreter 7 übergeben wird. Nach Übertragung des Testmodellanteils 3a wird dieser - gekennzeichnet als Testmodellanteil 3b - durch den Interpreter 7 auf dem zweiten System 1b zur Ausführung gebracht. Diese besonders bevorzugte Ausführungsform gestattet es insbesondere, Testmodelle in einem portierbaren Zustand zu verwalten, da keine für ein spezielles System optimierte Kompilierung erfolgen muss.

Die über eine bidirektionale Verbindung realisierte Kommunikation 4 zwischen den Systemen 1a und 1b könnte in einer besonders bevorzugten Ausführungsform durch Übermittlung von Datenpaketen realisiert werden. Dies würde in einem exemplarischen System bedeuten, dass einer dem Interpreter 7 übergeordneter Funktionsanteil auf dem System 1b das vorhandene Kommunikationsmittel 4 in zyklischen Abständen überwacht und bei Eingang eines Datenpakets dieses - je nach Implementierung um die Kommunikation betreffende Anteile bereinigt - dem Interpreter 7 auf dem System 1b zur Ausführung übergibt. Eine derartige exemplarische Vorgehensweise ermöglicht es, beim Entwurf eines Testmodells auf einfache Weise eine für mehrere Systeme ausgelegte Funktionalität zu erzeugen.

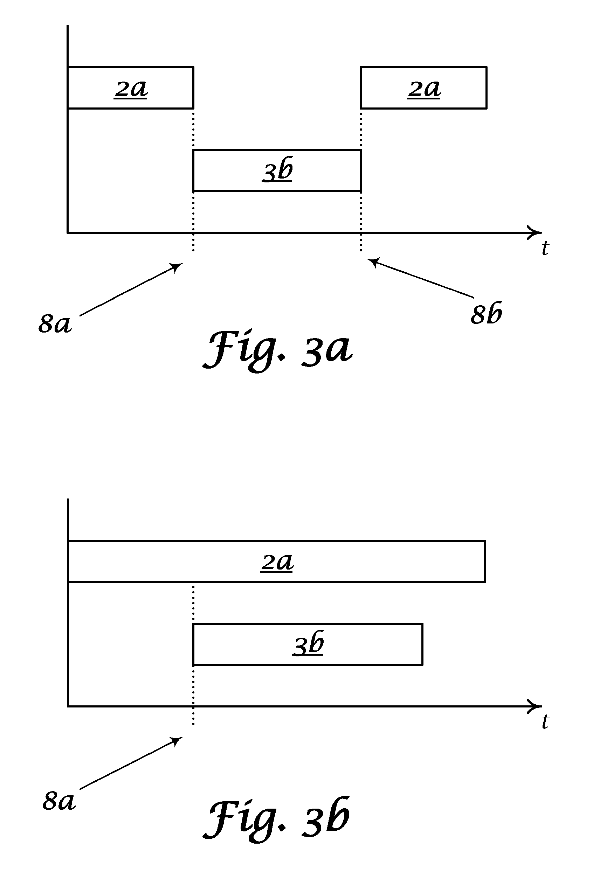

Die verteilte Ausführung von Testmodellanteilen im Sinne des erfindungsgemäßen Verfahrens kann, wie in den Fig. 3a bis 3c dargestellt, nach verschiedensten Vorgaben erfolgen. Dargestellt sind die zeitlichen Verhalten einer verteilten Ausführung auf zwei Systemen, dabei entspricht in den Figuren die obere Datenreihe einer Ausführung auf einem ersten System, die darunter befindliche Datenreihe einer Ausführung auf einem zweiten System.

Exemplarisch ist in Fig. 3a eine Ausführung nach Anspruch 3 dargestellt, welche beispielsweise Anwendung findet, wenn ein Testmodell 2a einen - nicht weiter aufgeführten zu übertragenden - Testmodellanteil 3a an ein zweites System überträgt und dieser Anteil 3b dort ausgeführt und die weitere Ausführung des Testmodells 2a bis zur vollständigen Ausführung des übertragenen Testmodellanteils 3b gestoppt wird. Der Zeitpunkt 8a markiert die Übertragung eines dem Testmodell 2a entnommenen Testmodellanteils 3a (vgl. z.B. Fig. 1) an das zweite System, der Zeitpunkt 8b markiert eine Reaktivierung des auf dem ersten System auszuführenden Testmodells 2a.

Die Zeitpunkte 8a und 8b, in der Darstellung als zeitlose Ereignisse aufgeführt, werden in einer bevorzugten Ausführung nicht zeitlos sein, sondern im Sinne der Kommunikationsmittel und/ oder der verwendeten Übertragungsmechanismen sowohl aufgrund benötigter Rechenzeit der ausführenden Systeme als auch aufgrund im Experimentaufbau verankerten Prinzipien - beispielsweise architekturbedingte Verzögerungen zwischen zwei Systemen - zeitbehaftet sein.

Fig. 3b zeigt eine Ausführungsform, welche zum Zeitpunkt 8a - nach Übermittlung des Testmodellanteils 3a - diesen Testmodellanteil 3b auf dem zweiten System ausführt, aber nicht auf die Beendigung der Ausführung wartet, sondern eigene weitere Anteile weiter ausführt.

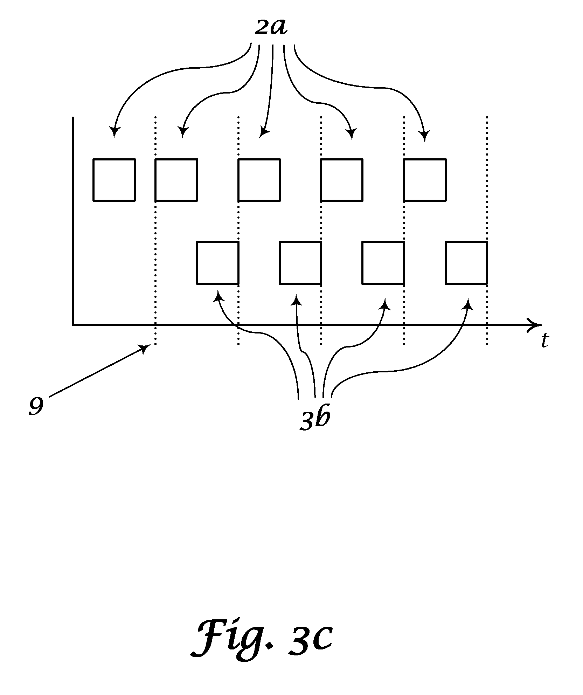

In Fig. 3c ist ein weiteres bevorzugtes Ausführungsbeispiel dargestellt. Die Ausführung des Testmodells 2a und des Testmodellanteils 3b auf den Systemen 1a, 1b (vgl. z.B. Fig. 1) geschieht synchronisiert nach Maßgabe der dem gesamten Experiment zugrunde liegenden Abtast- und Rechenfrequenz. Hier markiert der zyklisch dargestellte Zeitpunkt 9 den Beginn einer neuen Zeiteinheit, daraufhin wird der dieser Zeiteinheit zugehörige Funktionsanteil des Testmodells 2a und des Testmodellanteils 3b - sequentiell oder parallel - ausgeführt. Eine sequentielle Ausführung widerspricht nicht dem geforderten Kriterium der Rechtzeitigkeit, da in der Regel Ausführungszeiten von Rechenoperationen in viel kleineren zyklischen Zeiteinheiten stattfinden, als die durch genannte Frequenzen bedingte zyklische Zeiteinheiten eines Experimentaufbaus. Ferner kann experimentbedingt festgelegt werden, ob die Ausführung - da eine echte Parallelität auf verteilten Systemen realisierbar ist - parallel oder sequentiell oder vermischt erfolgen kann.

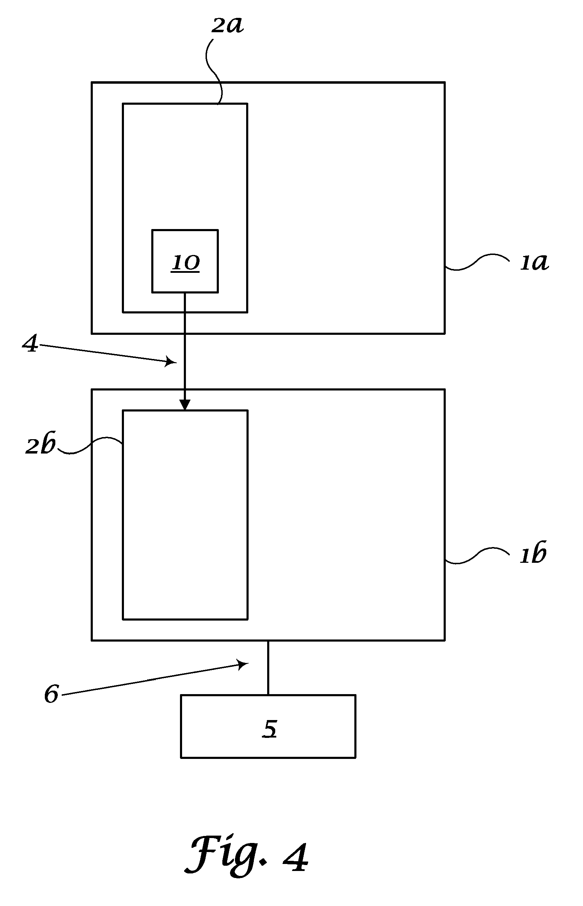

Im Unterschied zu Fig. 1 zeigt Fig. 4 den Aufruf eines eigenständigen Testmodells 2b auf einem zweiten System 1b, bedingt durch einen das Testmodell 2b auf dem zweiten System aufrufenden Aufruf 10 durch das Testmodell 2a über die Kommunikationsmittel 4. Diese Vorgehensweise eignet sich besonders vorteilhaft für Testmodelle großen Umfangs, welche nicht vollständig über die Kommunikationsmittel 4 übertragen werden müssen, sondern sich bereits auf dem ausführenden System befinden. Der Aufruf 10 aus dem Testmodell 2a kann in einer besonders bevorzugten Ausführung , wie in Anspruch 2 vorgesehen, in Form eines parametrierten Aufrufs einer auf dem zweiten System 1b - hier nicht dargestellten - Interpretervorrichtung geschehen, indem beispielsweise ein - nicht dargestellter - übergeordneter Funktionsanteil das vorhandene Kommunikationsmittel 4 zyklisch überwacht und den übermittelten parametrierten Aufruf 10 ausführt.

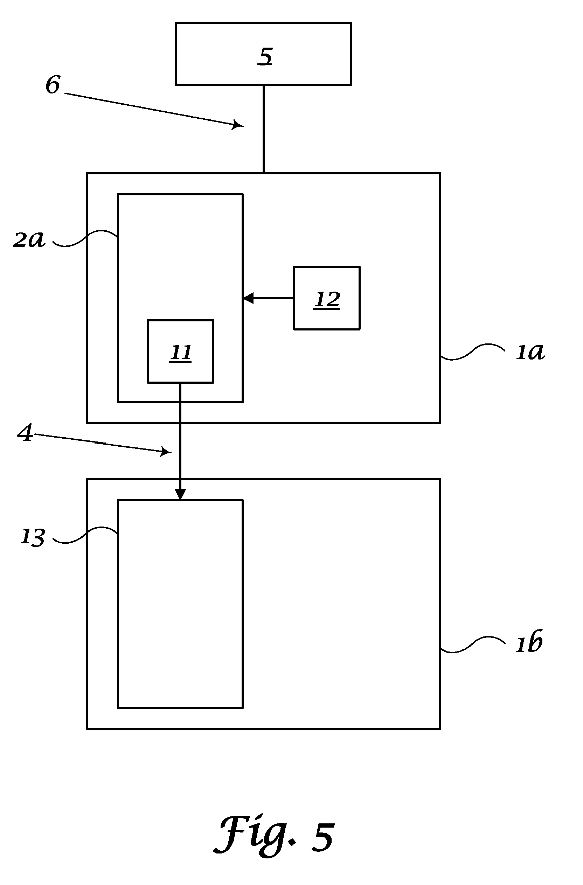

In vergleichbarer Weise zu den aufgeführten Übertragungsmechanismen zeigt Fig. 5 eine weitere bevorzugte Ausführung. Die einem Testvorgang durch Ausführen eines Testmodells 2a zugehörigen Testergebnisse 12 werden durch einen Übertragungsmechanismus 11 an einen Testergebnisse in Empfang nehmenden und/ oder auswertenden Testergebnisempfangsmechanismus 13 übermittelt. In einem exemplarischen Experimentaufbau werden durch Ausführen des Testmodells 2a auf einem ersten System 1a und dadurch erhaltene Testergebnisse 12 des Tests eines angeschlossenen Steuerungssystems 5 an einen auf einem zweiten System 1b - beispielsweise eine Experimentiervorrichtung - Empfangsmechanismus zum Empfang von Testergebnissen übermittelt, um dort beispielsweise weiterverarbeitet zu werden. Insbesondere ist ein solcher Mechanismus in exemplarischen Testaufbauten besonders hilfreich, wenn etwa während eines laufenden Testvorgangs Ergebnisinformationen auf einer - hier nicht gezeigten - zur Anzeige tauglichen Anzeigevorrichtung, beispielsweise eine auf einer Experimentiervorrichtung laufende Software, ausgegeben werden sollen.

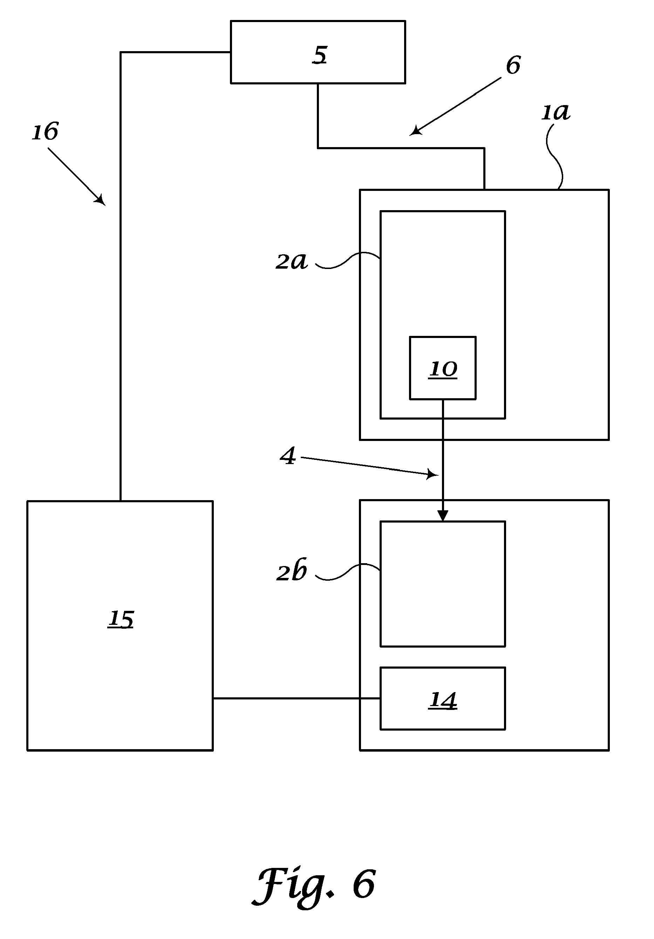

Fig. 6 schließlich zeigt einen weiteren typischen Experimentaufbau im Sinne einer besonders bevorzugten Ausführungsform. Ein Testaufbau umfasst wenigstens zwei zur Ausführung von Testmodellen geeignete Systeme 1a und 1b. Auf diesen Systemen sind die Testmodelle 2a und 2b zur Ausführung eines oder mehrerer Tests eingerichtet. Wenigstens eines der beiden Systeme steht mit dem - hier beispielhaft verwendeten - zu testenden elektronischen Steuerungssystem 5 über einen Datenkanal 6 in Verbindung. Ferner umfasst der Testaufbau ein herkömmliches Diagnosegerät 15, welches sowohl über eine Verbindung 16 zum zu testenden elektronischen Steuerungssystem 5 als auch über eine weitere Verbindung 17 zu wenigstens einem der Systeme 1b verfügt. Ein dergestalter Testaufbau ermöglicht den Zugriff auf vom Diagnosegerät 15 bereitgestellte Diagnosefunktionen - sowohl durch das Steuerungssystem 5 als auch durch eines der zur Testvorrichtung gehörenden Systeme 1b. Dazu existiert in einem der Systeme 1b eine Schnittstelle 14, welche - bedingt durch eine Wechselwirkung mit dem zweiten Testmodell 2b - ferner bedingt durch die bidirektionale Verbindung 4 zwischen den Systemen 1a, 1b und die auf wenigstens einem der Systeme 1a vorhandene Funktionalität zum Aufruf weiterer Testmodelle 10 - den Testmodellen 2a, 2b die Funktionalität des Diagnosegeräts 15 zur Verfügung stellt bzw. durch Kommunikation zwischen dem System 1b und dem Diagnosegerät 15 diese Funktionalität ermöglicht.

Ein solcher Testaufbau bewirkt insbesondere, dass aus dem Stand der Technik bekannte Nachteile vermieden werden können. Diagnosefunktionalität wird ohne Einbußen von Rechenleistung ermöglicht.

Der in Fig. 6 anhand eines Diagnosegeräts beschriebene Aufbau hat vor allem exemplarischen Charakter, vielmehr gilt das beschriebene Prinzip auch für weitere im Rahmen des Erfindungsgedankens konzipierte Tests. Dabei muss nicht zwingend ein Diagnosegerät verwendet werden; grundsätzlich ist eine technische Einheit denkbar, die eine Funktionalität bereitstellt, welche nicht Bestandteil des Test- bzw. Umgebungsmodells ist, und welche über eine geeignete Schnittstelle mit wenigstens einem der Systeme in Verbindung steht.

Schließlich sind alle durch Figuren beschriebenen Ausführungsformen nicht nur für sich ausführbar, sondern auch in Kombination denkbar. Hierfür wird im Weiteren auf die Patentansprüche verwiesen.

### Bezugszeichenliste

Buchstabenindizes verweisen in der Regel auf mehrfache Vorkommnisse eines Typs, bzw. auf weiterverarbeitete Varianten eines Typs.
- 1.: System einer Testvorrichtung

- 2.: Testmodell
- 3.: Testmodellanteil
- 4.: Bidirektionale Verbindung zwischen Systemen 1(a,b,...)
- 5.: Elektronisches Steuerungssystem
- 6.: Datenkanal zwischen dem elektronischen Steuerungssytem 5 und einem System der Testvorrichtung 1
- 7.: Testmodellinterpreter
- 8.: Übertragungszeitpunkt für Testmodellanteile 3(a,b,...) von einem ersten System 1(a)auf ein zweites System 1(b) bzw. reaktivierende Variante
- 9.: Beginn einer zyklischen Zeiteinheit bei synchronen Experimentaufbauten
- 10.: Aufruf eines Testmodells 2 auf einem weiteren System 1(a,b, ggf. c)
- 11.: Übertragungsmechanismus für Testergebnisse 12
- 12.: Testergebnisse
- 13.: Empfangsmechanismus für Testergebnisse 12
- 14.: Schnittstelle zum Diagnosegerät 15
- 15.: Diagnosegerät

- 16.: Verbindung zwischen Diagnosegerät 15 und Elektronischem Steuerungssystem 5
- 17.: Verbindung zwischen Diagnosegerät 15 und einem System 1

## Patentansprüche

1. Verfahren zum Test wenigstens eines elektronischen Steuerungssystems (5) durch Ausführung wenigstens eines Testmodells (2a) auf mindestens zwei bidirektional austauschenden Systemen (1a, 1b), wobei wenigstens eines der Systeme (1a, 1b) ein zur Ausführung von Umgebungs- und Testmodellen unter Echtzeitbedingungen geeigneter Simulationsrechner ist, wenigstens das erste System (1a) und zweite System (1b) zur Ausführung von Testmodellen (2a) und/ oder speziellen Testmodellanteilen (3a, 3b) geeignet sind und das Steuerungssystem (5) über einen Datenkanal (4) mit dem Simulationsrechner in Verbindung steht, das Testmodell (2a) auf dem ersten System (1a) ausgeführt wird und mittels Kommunikation mit einem zweiten System (1b) Teile (3b) des Testmodells (2a) auf dem zweiten System (1b) ausgeführt und/ oder an das zweite System (1b) übermittelt und anschließend ausgeführt werden.

2. Verfahren nach Anspruch 1, **dadurch gekennzeichnet, dass** eines der beiden bidirektional austauschenden Systeme (1a, 1b) eine Experimentiervorrichtung ist.

3. Verfahren nach Anspruch 1 oder 2, **dadurch gekennzeichnet, dass** die Ausführung des wenigstens einen Testmodells (2a) und/ oder der Teile des Testmodells (3a, 3b) durch einen auf wenigstens einem der bidirektional austauschenden Systeme (1a, 1b) vorhandenen Testmodellinterpreter (7) erfolgt.

4. Verfahren nach einem der vorherigen Ansprüche, **dadurch gekennzeichnet, dass** die Ausführung des Testmodells (2a) auf dem ersten System (1a) so lange unterbrochen ist, bis die Ausführung der Teile des Testmodells (3) auf dem zweiten System (1b) erfolgt ist.

5. Verfahren nach einem der vorherigen Ansprüche, **dadurch gekennzeichnet, dass** die Ausführung des Testmodells (2a) auf dem ersten System (1a) so lange unterbrochen ist, bis die Übermittlung der Teile des Testmodells (3a, 3b) vom ersten System (1a) an das zweite System (1b) erfolgt ist.

6. Verfahren nach einem der vorherigen Ansprüche, **dadurch gekennzeichnet, dass** die Ausführung des Testmodells (2a) auf dem ersten System (1a) so lange unterbrochen ist, bis die Übermittlung der Testergebnisse (12) vom ersten System (1a) an das zweite System (1b) erfolgt ist.

7. Verfahren nach einem der vorherigen Ansprüche, **dadurch gekennzeichnet, dass** die Ausführung des Testmodells (2b) oder der Teile des Testmodells (3b) auf dem zweiten System (1b) parallel zu durch die Ausführung des ersten Testmodells (2a) bedingten Aktionen des ersten Systems (1a) erfolgt.

8. Verfahren nach einem der vorherigen Ansprüche, **dadurch gekennzeichnet, dass** die Ausführung des Testmodells (2b) oder der Teile des Testmodells (3b) auf dem zweiten System (1b) synchron zu durch die Ausführung des ersten Testmodells (2a) bedingten Aktionen des ersten Systems (1a) erfolgt.

9. Verfahren nach einem der vorherigen Ansprüche, **dadurch gekennzeichnet, dass** die durch Ausführung des Testmodells (2a) auf dem ersten System (1a) bewirkte Ausführung der Teile des Testmodells (3b) auf dem zweiten System (2b) die weitere Ausführung von Teilen des Testmodells auf einem dritten System bewirkt.

10. Verfahren nach einem der vorherigen Ansprüche, **dadurch gekennzeichnet, dass** die Ausführung des Testmodells (2a) auf dem ersten System (1a) die Ausführung eines weiteren, eigenständigen Testmodells (2b) auf dem zweiten System (2b) bewirkt.

11. Verfahren nach einem der vorherigen Ansprüche, **dadurch gekennzeichnet, dass** die Ausführung eines, durch Ausführung eines Testmodells (2a) auf dem ersten System (1a), weiteren, eigenständigen Testmodells (2b) auf dem zweiten System (2b) die Ausführung weiterer, eigenständiger Testmodelle auf weiteren Systemen bewirkt.

12. Verfahren nach einem der vorherigen Ansprüche, **dadurch gekennzeichnet, dass** die Ausführung des ersten Testmodells (2a) auf einem ersten System (1a) die Übertragung (11) von Testergebnissen (12) oder weiteren Berechnungen des ersten Testmodells (2a) an ein zweites System bewirkt (2b).

13. Testvorrichtung, mindestens zwei bidirektional austauschende Systeme (1a, 1b) umfassend, zum Test wenigstens eines elektronischen Steuerungssystems (5) durch Ausführung wenigstens eines Testmodells (2a) auf der Testvorrichtung, wobei wenigstens eines der Systeme ein zur Ausführung von Umgebungs- und Testmodellen unter Echtzeitbedingungen geeigneter Simulationsrechner ist und wenigstens das erste und zweite System zur Ausführung von Testmodellen (2) und/ oder speziellen Testmodellanteilen (3) geeignet ist, das Testmodell (2a) auf dem ersten System (1a) ausführbar ist und mittels Kommunikation mit einem zweiten System (1b) Teile (3b) des Testmodells (2a) auf dem zweiten System (2b) ausführbar sind bzw. nach Übermittlung an das zweite System (2b) ausführbar sind.

14. Testvorrichtung nach Anspruch 13, **dadurch gekennzeichnet, dass** Testergebnisse (12) des ersten Testmodells (2a) an das zweite System (1b) übermittelbar sind.

15. Testvorrichtung nach Anspruch 13 oder 14, **dadurch gekennzeichnet, dass** mit ihr die Verfahrensschritte nach einem der Ansprüche 1 bis 12 durchführbar sind.
